(19) Europäisches Patentamt
European Patent Office
Office européen des brevets

(11) EP 1 229 058 A1

(12) EUROPEAN PATENT APPLICATION
published in accordance with Art. 158(3) EPC

(43) Date of publication:
**07.08.2002 Bulletin 2002/32**

(21) Application number: **00969897.8**

(22) Date of filing: **19.10.2000**

(51) Int Cl.$^7$: **C08F 279/00**

(86) International application number:
**PCT/JP00/07277**

(87) International publication number:
**WO 01/29101 (26.04.2001 Gazette 2001/17)**

(84) Designated Contracting States:
**AT BE CH CY DE DK ES FI FR GB GR IE IT LI LU MC NL PT SE**

(30) Priority: **19.10.1999 JP 29648999**

(71) Applicant: **IDEMITSU PETROCHEMICAL CO., LTD.**
**Tokyo 130-0015 (JP)**

(72) Inventors:
- **YAZAKI, Jun**
  **Chiba 299-0107 (JP)**
- **TAKEUCHI, Satoshi**
  **Chiba 299-0107 (JP)**

(74) Representative:
**Gille Hrabal Struck Neidlein Prop Roos**
**Patentanwälte,**
**Bruckner strasse 20**
**40593 Düsseldorf (DE)**

# (54) RUBBER-MODIFIED STYRENE RESIN, PROCESS FOR PRODUCING THE SAME, AND SHEET OF THE RESIN

(57) Provided is a rubber-modified styrenic resin with particles of a rubbery polymer dispersed therein. The continuous phase of the resin has a weight-average molecular weight (MwL) falling between 180,000 and 280,000, and its weight-average molecular weight and the 1 cm drawdown time (sec) of the resin sheet satisfy a formula, 1 cm drawdown time (sec) > (MwL/$10^4$) - 4.0. Also provided are an effective method for producing the resin, and a rubber-modified styrenic resin sheet produced by molding the resin. The resin is suitable for molding it into sheets. The resin sheet ensures a satisfactorily long time for its thermoforming, and therefore has good thermoforming stability.

EP 1 229 058 A1

## Description

### TECHNICAL FIELD

The present invention relates to a rubber-modified styrenic resin and a method for producing it, and also to a sheet of the rubber-modified styrenic resin. More precisely, the invention relates to a rubber-modified styrenic resin having good thermoforming stability and suitable to molding materials for sheets, to a method for producing it, and to a sheet of the rubber-modified styrenic resin.

### BACKGROUND ART

As having good mechanical properties such as good impact strength and having good moldability, rubber-modified styrenic resins with a rubbery polymer therein have heretofore been used widely in the art by molding them into sheets followed by further working the resin sheets into secondary products such as wrapping or packaging containers for edibles and daily necessaries. Briefly, the resins are molded through extrusion into resin sheets, and the resin sheets are thermoformed in vacuum or under pressure into secondary products.

When the rubber-modified styrenic resin sheet is heated for thermoforming it, it is softened under heat and becomes thermoformable. With the lapse of time, however, the thus-softened sheet often melts to draw down. If the softened resin sheet draws down too rapidly, the thermoformable time for it shall be shortened and, as a result, stable production of thermoformed products from it will be difficult. In addition, the resin sheet having drawn down too much will reach heaters, and the thermoformed products from it will have a bad appearance.

For prolonging the time to be taken by such a thermosoftened, rubber-modified styrenic resin sheet before it draws down, it is known that increasing the molecular weight of the continuous phase of the rubber-modified styrenic resin is effective. However, merely increasing the molecular weight of the continuous phase of the rubber-modified styrenic resin is problematic in that the productivity of the resin sheets is lowered as the fluidity of the starting resin is low.

In that situation, it is desired to develop a rubber-modified styrenic resin, of which the advantages are that the productivity in molding it into sheets is not lowered and that the thermoforming time for the resin sheets is satisfactorily long, and also to develop a method for producing the resin.

The object of the present invention is to provide a rubber-modified styrenic resin of which the physical properties are enough for ensuring a satisfactorily long time for thermoforming the resin sheets, to provide a method for producing the resin, and to provide a rubber-modified styrenic resin sheet formed from the resin and having good thermoforming stability.

### DISCLOSURE OF THE INVENTION

We, the present inventors have assiduously studied to solve the problems noted above, and, as a result, have found that the above-mentioned object can be attained by using a rubber-modified styrenic resin which contains particles of a rubbery polymer dispersed therein and of which the continuous phase has a specific weight-average molecular weight specifically correlated with the 1 cm drawdown time (sec) of the resin sheet. On the basis of this finding, we have completed the present invention.

The gist of the invention includes the following:

(1) A rubber-modified styrenic resin with particles of a rubbery polymer dispersed therein, which is characterized in that its continuous phase has a weight-average molecular weight (MwL) falling between 180,000 and 280,000, and that the weight-average molecular weight (MwL) and the 1 cm drawdown time (sec) of the resin sheet satisfy the following formula:

$$\text{1 cm drawdown time (sec)} > (\text{MwL}/10^4) - 4.0.$$

(2) The rubber-modified styrenic resin of above (1), of which the continuous phase has a degree of branching of from 0.2 to 1.0 for its absolute molecular weight of 1,000,000 measured in GPC/LALLS.

(3) The rubber-modified styrenic resin of above (1) or (2), of which the rubbery polymer content falls between 3 and 12 % by mass.

(4) A method for producing a rubber-modified styrenic resin of any of above (1) to (3) by polymerizing a rubbery polymer and a monomer component consisting essentially of a styrenic monomer in the presence of a polyfunctional initiator, wherein the amount of the polyfunctional initiator falls between 50 and 500 ppm relative to the monomer component consisting essentially of a styrenic monomer.

(5) The method for producing a rubber-modified styrenic resin of above (4), wherein the amount of the polyfunctional initiator falls between 100 and 500 ppm relative to the monomer component consisting essentially of a styrenic monomer.
(6) The method for producing a rubber-modified styrenic resin of above (4) or (5), wherein the polyfunctional initiator is a tetrafunctional organic compound of the following general formula:

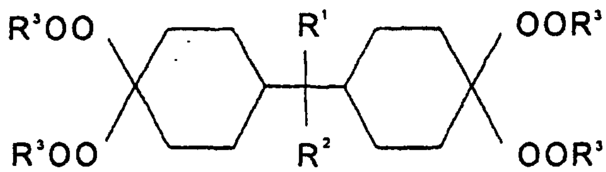

wherein $R^1$ and $R^2$ each represent a hydrogen atom or an alkyl group having 1 or 2 carbon atoms; and $R^3$ represents an alkyl group having from 1 to 8 carbon atoms.
(7) The method for producing a rubber-modified styrenic resin of any of above (4) to (6), wherein the polyfunctional initiator is 2,2-bis(4,4-di-t-butylperoxycyclohexyl)propane.
(8) A method for producing a rubber-modified styrenic resin of any of above (1) to (3) by polymerizing a rubbery polymer and a monomer component consisting essentially of a styrenic monomer in the presence of an unsaturated compound having a plurality of copolymerizing double bonds, wherein the amount of the unsaturated compound falls between 50 and 250 ppm relative to the monomer component consisting essentially of a styrenic monomer.
(9) A rubber-modified styrenic resin sheet prepared by molding the rubber-modified styrenic resin of any of above (1) to (3).

## BRIEF DESCRIPTION OF THE DRAWING

Fig. 1 is an explanatory view indicating a method of measuring the 1 cm drawdown time (sec) of a rubber-modified styrenic resin sheet.
In the drawing, the reference numerals and signs each have the following meaning:

A: sheet displacement,
B: 1 cm drawdown time,
C: time,

1: start of heating,
2: fine waving,
3: shrink back,
4: draw down,
5: 1 cm length.

## BEST MODES OF CARRYING OUT THE INVENTION

The rubber-modified styrenic resin of the invention contains particles of a rubbery polymer dispersed therein, and its continuous phase has a weight-average molecular weight (MwL) falling between 180,000 and 28,000. The weight-average molecular weight (MwL) and the 1 cm drawdown time (sec) of the resin sheet satisfy the above-mentioned formula.
The rubbery polymer for the resin may be any one generally used for modifying styrenic resins. Its preferred examples include polybutadienes, polyisoprenes, styrenebutadiene copolymers, butadiene-isoprene copolymers, ethylene-propylene copolymers, ethylene-propylene-non-conjugated diene copolymers, styrene-butadiene-styrene triblock copolymers, etc.
The rubbery polymer content of the rubber-modified styrenic resin falls between 3 and 12 % by mass, preferably between 5 and 11 % by mass, more preferably between 7 and 10 % by mass. If its rubbery polymer content is smaller than 3 % by weight, the modified resin could not have increased impact resistance; but if larger than 12 % by weight, the modified resin will lose stiffness intrinsic to styrenic resins. With its rubbery polymer content falling within the defined range, the modified resin has well-balanced stiffness and impact resistance.
The styrenic resin that forms the continuous phase of the rubber-modified styrenic resin of the invention may

be prepared by polymerizing or copolymerizing a monomer component which consists essentially of a styrenic monomer. The styrenic monomer includes, for example, styrene, α-substituted alkylstyrenes such as α-methylstyrene, etc.; nucleus-substituted alkylstyrenes such as p-methylstyrene, p-tert-butylstyrene, etc.; nucleus-substituted halogenostyrenes such as p-chlorostyrene, etc. One or more of these styrenic monomers may be used either singly or as combined.

Comonomers copolymerizable with the above-mentioned styrenic monomers include, for example, vinylic compounds such as acrylonitrile, acrylic acid, methacrylic acid, maleic acid, fumaric acid, maleic anhydride, methyl acrylate, ethyl acrylate, propyl acrylate, butyl acrylate, 2-ethylhexyl acrylate, methyl methacrylate, ethyl methacrylate, propyl methacrylate, butyl methacrylate, 2-ethylhexyl methacrylate, etc.; and also maleimide, nucleus-substitutedmaleimides, etc. One or more of these comonomers may be used either singly or as combined.

For producing the rubber-modified styrenic resin, a rubbery polymer is polymerized or copolymerized with a styrenic monomer or with a combination of a styrenic monomer and its comonomer, in the presence of a polyfunctional initiator; or a rubbery polymer is polymerized or copolymerized with a styrenic monomer or with a combination of a styrenic monomer and its comonomer, in the presence of an unsaturated compound having a plurality of copolymerizing double bonds.

In the method for producing the rubber-modified styrenic resin by polymerizing a rubbery polymer and a monomer component consisting essentially of a styrenic monomer in the presence of a polyfunctional initiator, the amount of the polyfunctional initiator falls between 50 and 500 ppm relative to the monomer component consisting essentially of a styrenic monomer. In this method, the amount of the polyfunctional initiator preferably falls between 100 and 500 ppm, more preferably between 200 and 500 ppm relative to the monomer component consisting essentially of a styrenic monomer. This is because, if the amount of the polyfunctional initiator to be in the polymerization system is smaller than 50 ppm, the drawdown resistance of the sheet of the rubber-modified styrenic resin produced in the method will be poor when the resin sheet is thermoformed; and if the amount is larger than 500 ppm, a high-molecular-weight component will be formed too much when the rubbery polymer is polymerized with the monomer component consisting essentially of a styrenic monomer. If so, the viscosity of the reaction liquid will increase, and the polymerization system will be difficult to stir and transport. As a result, it will be often difficult to stably run the polymerization unit.

The polyfunctional initiator to be used in the method may have any chemical structure, including trifunctional or tetrafunctional organic compounds, etc. For example, preferred are tetrafunctional organic compounds such as those proposed in Japanese Patent Laid-Open Nos. 125106/1993 and 178920/1993. In these laid-open publications, the tetrafunctional organic compounds disclosed are used for producing rubber-modified styrenic resins of high durability, and the amount of the compound to be in the polymerization system therein is around 2,000 ppm or so relative to the styrenic monomer to be polymerized in the presence of the compound. However, the amount of the polyfunctional initiator to be in the method of the present invention for producing rubber-modified styrenic resins, which are for sheets having good thermoforming stability, is specifically defined to fall between 50 and 500 ppm relative to the monomer component consisting essentially of a styrenic monomer, as so described hereinabove.

As the polyfunctional initiator for use herein, especially preferred are tetrafunctional organic compounds of the following general formula:

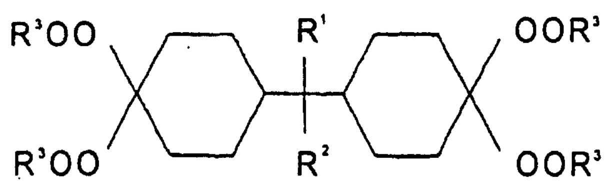

wherein $R^1$ and $R^2$ each represent a hydrogen atom or an alkyl group having 1 or 2 carbon atoms; and $R^3$ represents an alkyl group having from 1 to 8 carbon atoms. The alkyl group for $R^1$ and $R^2$ includes a methyl group and an ethyl group; and the alkyl group for $R^3$ includes a methyl group, an ethyl group, an n-propyl group, an isopropyl group, an n-butyl group, an isobutyl group, a sec-butyl group, a tert-butyl, an n-pentyl group, an isopentyl group, an n-hexyl group, an n-heptyl group, an n-octyl group, etc.

The tetrafunctional organic compounds of the general formula include, for example, 2,2-bis(4,4-di-tert-butylperoxycyclohexyl)propane, 2,2-bis(4,4-di-tert-hexylperoxycyclohexyl)propane, 2,2-bis(4,4-di-tert-octylperoxycyclohexyl)propane, etc. Of those, especially preferred is 2,2-bis(4,4-di-tert-butylperoxycyclohexyl)propane.

In the method for producing the rubber-modified styrenic resin by polymerizing or copolymerizing a rubbery polymer with a styrenic monomer or with a combination of a styrenic monomer and its comonomer, in the presence of an unsaturated compound having a plurality of copolymerizing double bonds, the amount of the unsaturated compound falls between 50 and 250 ppm relative to the monomer component consisting essentially of a styrenic monomer.

In this method, the amount of the unsaturated compound is defined to fall between 50 and 250 ppm relative to the monomer component consisting essentially of a styrenic monomer. This is because, if the amount of the unsaturated compound to be in the polymerization system is smaller than 50 ppm, the branched structure introduction into the polymer chain of the rubber-modified styrenic resin produced will be unsatisfactory, and the drawdown resistance of the resin sheet will be poor when the sheet is thermoformed. On the other hand, if the amount of the unsaturated compound is larger than 250 ppm, the branched structure introduction into the polymer chain of the rubber-modified styrenic resin produced will be too much. If so, the resin will be readily gelled.

The unsaturated compound suitable for use herein includes non-conjugated divinyl compounds such as divinylbenzene, etc.; and polyacrylates such as ethylene glycol dimethacrylate, trimethylolpropane trimethacrylate, tetramethylolmethane tetraacrylate, etc. One or more of these unsaturated compounds maybe used either singly or as combined.

Regarding the polymerization mode in producing the rubber-modified styrenic resin of the invention, herein employable is any known polymerization method. Preferred is continuous bulk polymerization. The polymerization reactor to be used for the polymerization method is not specifically defined. Herein usable are any ordinary stirring polymerization reactors for complete admixture, plug-assisted flow polymerization reactors, polymerization reactors for static admixture, and their combinations.

In producing the rubber-modified styrenic resin, the polyfunctional initiator or the unsaturated compound having a plurality of copolymerizing double bonds may be uniformly mixed with a monomer component consisting essentially of a styrenic monomer and containing a rubbery polymer dissolved therein, before the monomer component is fed into a polymerization reactor; or it may be fed into a polymerization reactor that contains the starting monomer component having been fed thereinto, all at a time or portionwise at different times; or it may be fed thereinto after the degree of conversion into polymer in the reactor has reached 20 to 40 %.

In the method of producing the rubber-modified styrenic resin, the temperature in the polymerization reactor and the amount of the chain transfer agent to be fed thereinto are so controlled that the continuous phase of the resin produced could have a weight-average molecular weight (MwL) falling between 180,000 and 280,000. More preferably, they are so controlled that the weight-average molecular weight (MwL) of the continuous phase of the resin produced could fall between 180,000 and 260,000. The chain transfer agent may be any one generally used in the art, including, for example, mercaptans such as n-dodecylmercaptan, t-dodecylmercaptan, n-octylmercaptan, etc.; as well as $\alpha$-methylstyrene dimers, etc.

The weight-average molecular weight (MwL) of the continuous phase of the rubber-modified styrenic resin is a linear weight-average molecular weight measured in GPC (gel permeation chromatography). The method for measuring it is as follows: The continuous phase, polystyrene moiety of the rubber-modified styrenic resin is separated from the rubber component thereof by dissolving it in an aromatic hydrocarbon solvent such as toluene or the like, and this is introduced into a GPC column. For example, the RI detector to be used is Waters' Model M410; the column is Toso's Model TSK·GEL·GMH6; the solvent is tetrahydrofuran; the sample flow rate is 1.0 ml/min; the sample temperature is 40°C; the sample amount introduced into the column is 200 μl; and the sample concentration is 0.2 g/100 ml. Based on the standard calibration curve of Toso's standard polystyrene, the linear molecular weight ($M_L$) of the sample is obtained. With that, the weight-average molecular weight (MwL) of the continuous phase of the resin is obtained according to the following formula:

$$MwL = \Sigma(WiMi)/\Sigma(Wi)$$

wherein Wi indicates the weight fraction of the eluate volume (Vi); and Mi indicates the molecular weight of the eluate volume (Vi).

In producing the rubber-modified styrenic resin by polymerizing a rubbery polymer and a monomer component consisting essentially of a styrenic monomer, a predetermined amount of a polyfunctional initiator or a unsaturated compound having a plurality of copolymerizing double bonds is added to the reaction system, by which a branched structure is introduced into the polymer chain of the resin produced. Preferably, the branched structure introduction into the polymer chain falls between 0.2 and.1.0 in terms of the degree of branching in the polymer chain having an absolute molecular weight measured in GPC/LALLS of 1,000,000.

The absolute molecular weight ($M_B$) is measured in GPC/LALLS, as in the Examples mentioned hereinunder. For example, the scattered light photometer to be used is Toso's Model LS-8000; the RI detector is Toso's Model RI-801; the column is Shodex-A806M; the solvent is tetrahydrofuran; the sample flow rate is 1.0 ml/min; the sample temperature is 35°C; the sample amount introduced into the column is 100 μl; and the sample concentration is 0.2 g/100 ml. The degree of branching, $n_{1,000,000}$ for the absolute molecular weight ($M_B$) measured in GPC/LALLS of 1,000,000 is calculated according to the method described in J. Chem. Phys., Vol. 17, p. 1301 (1949) and J. Appl. Polym. Sci., Vol. 33, p. 1909 (1987). In this, the value of the following formula:

$$g = (M_L/M_B)^{1.138}$$

is obtained from the linear molecular weight ($M_L$) and the absolute molecular weight ($M_B$) obtained in the manner as above. With that, the degree of branching, $n_{1,000,000}$ for the absolute molecular weight ($M_B$) of 1,000,000 is obtained according to the following formula:

$$g = 1/n_{1,000,000} \times \ln(1 + n_{1,000,000}).$$

In the method for producing the rubber-modified styrenic resin, it is desirable that the polymerization condition is so controlled that the particles of the rubbery polymer dispersed in the resin produced have an area-average particle size falling between 1.5 and 4 µm. This is because, if the area-average particle size of the rubbery polymer particles dispersed in the resin is smaller than 1.5 µm, the sheet impact strength of the resin sheet prepared by molding the resin will be low; but if larger than 4 µm, the surface gloss of the resin sheet will be low.

To mold the rubber-modified styrenic resin into sheets, employable is any ordinary extrusion molding method generally used in the art for molding rubber-modified styrenic resins. In the method of molding the resin into sheets, any ordinary lubricant, antistatic agent, antioxidant, heat stabilizer, pigment, dye, UV absorbent, and plasticizer may be added to the resin. For enhancing the impact resistance of the resin sheets, an additional rubbery polymer may be added to the resin by kneading them.

The resin sheets prepared by molding the rubber-modified styrenic resin in the manner as above can be thermoformed in vacuum or under pressure into secondary-worked products, for example, into wrapping or packaging containers for edibles and daily necessaries.

The method for evaluating the drawdown resistance of the rubber-modified styrenic resin sheets is described. A resin sheet sample having a thickness of 0.5 mm is prepared. This is fitted in a frame having a size of 235 mm × 235 mm, and heated by upper and lower heaters at a heating rate of 180°C/min. Being thus heated, the sheet sample is displaced as in Fig. 1 that indicates the relationship between the sheet displacement and the heating time. Concretely, the sheet is finely waved just after the start of heating, then once draws down, but immediately shrinks back to be flattened. With being further heated, the sheet again draws down. In this stage, the time (sec) before the center of the sheet has drawn down by 1 cm based on the shrink-back point of the sheet is measured, and this is defined as the 1 cm drawdown time (sec) of the sheet tested. For evaluating the drawdown resistance of the rubber-modified styrenic resin sheet, referred to is the 1 cm drawdown time (sec) of the sheet measured in the manner as described herein. This is based on the fact that the time within which the sheet is thermoformable corresponds to the time taken by the sheet having once shrunk back before its center draws down by 1 cm.

Of the rubber-modified styrenic resin of the invention, the continuous phase has a weight-average molecular weight (MwL) falling between 180,000 and 280, 000, and after the resin has been formed into a sheet, the resin sheet satisfies the following formula that indicates the relationship between the 1 cm drawdown time (sec) of the sheet and the weight-average molecular weight (MwL) of the continuous phase of the resin:

$$1 \text{ cm drawdown time (sec)} > (MwL/10^4) - 4.0.$$

In case where the weight-average molecular weight (MwL) of the continuous phase of the rubber-modified styrenic resin is within a relatively high region, falling between 220,000 and 280,000, the 1 cm drawdown time of the resin sheet well satisfies the above-mentioned formula. However, in case where the weight-average molecular weight (MwL) of the continuous phase of the rubber-modified styrenic resin is within a relatively low region, falling between 180,000 and 220,000, it is desirable that the resin is so controlled that the 1 cm drawdown time of the resin sheet satisfies the following formula:

$$1 \text{ cm drawdown time (sec)} > (0.5 \times MwL/10^4) + 7.0.$$

In the rubber-modified styrenic resin of the invention, of which the weight-average molecular weight (MwL) of the continuous phase is so correlated with the 1 cm drawdown time (sec) of the resin sheet that they satisfy the requirement as above, the polymer chain is designed to have a predetermined number of branched structures. Accordingly, when the resin is formed into a sheet, the sheet can have a prolonged 1 cm drawdown time (sec) as compared with sheets of conventional rubber-modified styrenic resins with no branched structure. As a result, the resin sheet of the invention can ensure a satisfactorily prolonged time for its thermoforming.

The invention is described in more detail with reference to the following Examples.

[Example 1]

(1) Production of rubber-modified styrenic resin:

To a styrene solution containing 7.0 % by mass of a rubbery polymer, polybutadiene rubber [Ube Kosan's BR15HB], added were 350 ppm, in terms of its pure product and based on styrene, of a polyfunctional initiator, 2,2-bis (4,4-di-tert-butylperoxycyclohexyl)propane [Kayaku Akuzo's Perkadox 12], 120 ppm, based on styrene, of a chain transfer agent, n-dodecylmercaptan [from Nippon Yushi], and 500 ppm, based on the total of the starting materials, of an antioxidant [Ciba-Geigy's Irganox 245].

The starting solution thus prepared was continuously fed into a first polymerization reactor of a type for complete admixture having a capacity of 20 liters (its inside was kept at 100°C) at a feed rate of 20 liters/hr. Next, the polymer formed in the first polymerization reactor was led into a second polymerization reactor of a type for complete admixture having a capacity of 20 liter, then into a third, plug-assisted flow polymerization reactor having a capacity of 30 liters, and finally into a fourth, plug-assisted flow polymerization reactor having a capacity of 30 liters in that order. In these, the polymerization temperature was kept falling between 105°C and 180°C, and the starting solution was polymerized to attain a final conversion of at least 70 %.

In the first polymerization reactor of a type for complete admixture, a double helical stirrer was used and kept rotating at 250 rpm; in the second polymerization reactor of a type for complete admixture, a double helical stirrer was used and kept rotating at 70 rpm at 130°C; in the third, plug-assisted flow polymerization reactor, the inlet temperature was 135°C and the outlet temperature was 140°C; and in the fourth, plug-assisted flow polymerization reactor, the inlet temperature was 145°C and the outlet temperature was 150°C. The final conversion was 72 %.

After having been thus polymerized, the resulting reaction product was led into a vacuum degassing reactor heated at 240 to 250°C, in which the volatile components including the non-reacted monomer and the solvent were removed from the product to obtain a rubber-modified styrenic resin.

The continuous phase of the rubber-modified styrenic resin obtained herein had a linear weight-average molecular weight (MwL) of 240,000, measured according to the method described hereinabove. It had a degree of branching of 0.5 for its absolute molecular weight ($M_B$) of 1,000,000 measured in GPC/LALLS.

(2) Production of rubber-modified styrenic resin sheet:

To the rubber-modified styrenic resin obtained in the above (1), added was 2.7 % by mass, based on the total of the polybutadiene rubber and styrene, of a plasticizer, liquid paraffin [Idemitsu Kosan's CP50S]. These were kneaded and pelletized into pellets of the resin.

Next, the rubber-modified styrenic resin pellets were extrusion-molded into a sheet. The extrusion-molding machine used was equipped with a sheeting extruder unit [Shinko Kikai Seisakusho's EX35], a take-up unit [Tanabe Plastic Kikai's S-205-1] and a roll conditioner unit [Matsui Seisakusho's MCIII]. The resin temperature in the extruder was 230°C; and the screw revolution was 80 rpm. The lip opening of the die was 0.7 mm; and the roll temperature was 80°C, controlled by the roll controller. The rubber-modified styrenic resin sheet thus obtained herein had a thickness of 0.5 mm.

(3) Evaluation of rubber-modified styrenic resin sheet:

The rubber-modified styrenic resin sheet obtained in the above (2) was fitted in a square frame having a size of 235 mm x 235 mm, and its both surfaces were heated by the use of a thermoforming machine [Asano Laboratory's FK-0431-10]. The heater temperature was 360°C; the uppermost limit of the temperature of the sheet heated was 200°C; and the heating rate was 180°C/min. Based on the point at which the sheet shrank back, the time (sec) taken by the sheet before its center drew down by 1 cm was measured. The measurement was repeated 5 times in all, and the five data thus obtained were averaged. The thus-averaged 1 cm drawdown time (sec) of the sheet was 20.5 seconds.

Accordingly, it is understood that the 1 cm drawdown time (sec) of the sheet is larger than the defined parameter [$(MwL/10^4) - 4.0$] of being 20 seconds.

The rubber-modified styrenic resin sheet obtained in the above (2) was thermoformed into tray containers in a mode of vacuum-pressure thermoforming. Since the sheet ensured a satisfactorily long time for its thermoforming, stable production of tray containers from it was possible. The tray containers obtained herein all had a uniform thickness, and presented a good appearance with neither surface roughness nor wrinkles that might be caused by drawdown of the sheet. The design of the mold used was well transferred onto the tray containers.

The results are given in Table 1.

[Comparative Example 1]

(1) Production of rubber-modified styrenic resin:

To a styrene solution containing 7.0 % by mass of a rubbery polymer, polybutadiene rubber [Ube Kosan's BR15HB], added were 350 ppm, in terms of its pure product and based on styrene, of a polyfunctional initiator, 1,1-bis (tert-butylperoxy)-3,3,5-trimethylcyclohexane [Nippon Yushi's Perhexa 3M], 120 ppm, based on styrene, of a chain transfer agent, n-dodecylmercaptan (from Nippon Yushi), and 500 ppm, based on the total of the starting materials, of an antioxidant [Ciba-Geigy's Irganox 245).

The starting solution thus prepared was continuously fed into a first polymerization reactor of a type for complete admixture having a capacity of 20 liters (its inside was kept at 100°C) at a feed rate of 16 liters/hr. Next, the polymer formed in the first polymerization reactor was led into a second polymerization reactor of a type for complete admixture having a capacity of 20 liter, then into a third, plug-assisted flow polymerization reactor having a capacity of 30 liters, and finally into a fourth, plug-assisted flow polymerization reactor having a capacity of 30 liters in that order. In these, the polymerization temperature was kept falling between 105°C and 150°C, and the starting solution was polymerized to attain a final conversion of at least 70 %.

In the first polymerization reactor of a type for complete admixture, a double helical stirrer was used and kept rotating at 250 rpm; in the second polymerization reactor of a type for complete admixture, a double helical stirrer was used and kept rotating at 70 rpm at 130°C; in the third, plug-assisted flow polymerization reactor, the inlet temperature was 140°C and the outlet temperature was 145°C; and in the fourth, plug-assisted flow polymerization reactor, the inlet temperature was 155°C and the outlet temperature was 165°C. The final conversion was 77 %.

After having been thus polymerized, the resulting reaction product was led into a vacuum degassing reactor heated at 240 to 250°C, in which the volatile components including the non-reacted monomer and the solvent were removed from the product to obtain a rubber-modified styrenic resin.

The continuous phase of the rubber-modified styrenic resin obtained herein had a linear weight-average molecular weight (MwL) of 240,000. It had a degree of branching of 0.0 for its absolute molecular weight ($M_B$) of 1,000,000 measured in GPC/LALLS.

(2) Production of rubber-modified styrenic resin sheet:

The rubber-modified styrenic resin obtained in the above (1) was molded into a sheet in the same manner as in (2) in Example 1. In this, however, the amount of the plasticizer, liquid paraffin added to the resin was 1.0 % by mass based on the total of the polybutadiene rubber and styrene.

(3) Evaluation of rubber-modified styrenic resin sheet:

The 1 cm drawdown time (sec) of the rubber-modified styrenic resin sheet obtained in the above (2) was measured in the same manner as in (3) in Example 1, and it was 19.0 seconds.

Accordingly, it is understood that the 1 cm drawdown time (sec) of the sheet is smaller than the defined parameter [$(MwL/10^4)$ - 4.0] of being 20 seconds.

The rubber-modified styrenic resin sheet obtained in the above (2) was thermoformed into tray containers in a mode of vacuum-pressure thermoforming. The fine pattern of the design of the mold used could not be well transferred onto some tray containers formed herein.

The results are given in Table 1.

[Example 2]

(1) Production of rubber-modified styrenic resin:

A rubber-modified styrenic resin was produced in the same manner as in (1) in Example 1. In this, however, the amount of the polyfunctional initiator, 2,2-bis(4,4-di-tert-butylperoxycyclohexyl)propane added was 500 ppm in terms of its pure product and based on styrene; and the amount of the chain transfer agent, n-dodecylmercaptan added was 150 ppm based on styrene.

(2) Production and evaluation of rubber-modified styrenic resin sheet:

In the same manner as in (2) and (3) in Example 1, the rubber-modified styrenic resin obtained in the above (1) was pelletized and molded into a sheet, and the sheet was evaluated. In this, however, the amount of the plasticizer, liquid paraffin added to the resin was 3.2 % by mass based on the total of the polybutadiene rubber and styrene.
The results are given in Table 1.

[Example 3]

(1) Production of rubber-modified styrenic resin:

A rubber-modified styrenic resin was produced in the same manner as in (1) in Example 1. In this, however, used was a styrene solution containing 6.0 % by mass of a rubbery polymer, polybutadiene rubber [Asahi Chemical's NF55AE].

(2) Production and evaluation of rubber-modified styrenic resin sheet:

In the same manner as in (2) and (3) in Example 1, the rubber-modified styrenic resin obtained in the above (1) was pelletized and molded into a sheet, and the sheet was evaluated. In this, however, the amount of the plasticizer, liquid paraffin added to the resin was 2.1 % by mass based on the total of the polybutadiene rubber and styrene.
The results are given in Table 1.

[Example 4]

(1) Production of rubber-modified styrenic resin:

A rubber-modified styrenic resin was produced in the same manner as in (1) in Example 1. In this, however, the amount of the polyfunctional initiator, 2,2-bis(4,4-di-tert-butylperoxycyclohexyl)propane added was 300 ppm in terms of its pure product and based on styrene; and the amount of the chain transfer agent, n-dodecylmercaptan added was 200 ppm based on styrene.

(2) Production and evaluation of rubber-modified styrenic resin sheet:

In the same manner as in (2) and (3) in Example 1, the rubber-modified styrenic resin obtained in the above (1) was pelletized and molded into a sheet, and the sheet was evaluated. In this, however, the amount of the plasticizer, liquid paraffin added to the resin was 1.0 % by mass based on the total of the polybutadiene rubber and styrene.
The results are given in Table 1.

[Comparative Example 2]

(1) Production of rubber-modified styrenic resin:

To a styrene solution containing 7.0 % by mass of a rubbery polymer, polybutadiene rubber [Ube Kosan's BR15HB], added was 500 ppm, based on the total of the starting materials, of an antioxidant [Ciba-Geigy's Irganox 245]. To this, however, a polymerization initiator and a chain transfer agent were not added. The starting solution thus prepared was polymerized in the same manner as in Comparative Example 1 to obtain a rubber-modified styrenic resin. In this, however, the feed rate of the solution to the first polymerization reactor of a type for complete admixture was 16 liters/hr, and the temperature inside the first polymerization reactor was kept at 120°C.
The continuous phase of the rubber-modified styrenic resin obtained herein had a linear weight-average molecular weight (MwL) of 207,000. It had a degree of branching of 0.0 for its absolute molecular weight ($M_B$) of 1,000,000 measured in GPC/LALLS.

(2) Production of rubber-modified styrenic resin sheet:

The rubber-modified styrenic resin obtained in the above (1) was molded into a sheet in the same manner as in (2) in Example 1. In this, however, the amount of the plasticizer, liquid paraffin added to the resin was 1.0 % by mass based on the total of the polybutadiene rubber and styrene.

(3) Evaluation of rubber-modified styrenic resin sheet:

The 1 cm drawdown time (sec) of the rubber-modified styrenic resin sheet obtained in the above (2) was measured in the same manner as in (3) in Example 1, and it was 15.0 seconds.
Accordingly, it is understood that the 1 cm drawdown time (sec) of the sheet is smaller than the defined parameter [($MwL/10^4$) - 4.0] of being 16.7 seconds.
The rubber-modified styrenic resin sheet obtained in the above (2) was thermoformed into tray containers in a mode of vacuum-pressure thermoforming. Some tray containers formed herein were defective in that their thickness was partly thinned. Their appearance was not good, and their mechanical strength was low.
The results are given in Table 1.

[Example 5]

(1) Production of rubber-modified styrenic resin:

A rubber-modified styrenic resin was produced in the same manner as in (1) in Example 1. In this, however, 60 ppm, in terms of its pure product and based on styrene, of an unsaturated compound having a plurality of double bonds, divinylbenzene (from Wako Pure Chemical) of 55 % purity was added to the styrene solution in place of the polyfunctional initiator; and the chain transfer agent was not added thereto. The temperature inside the first polymerization reactor of a type for complete admixture was kept at 120°C.

(2) Production and evaluation of rubber-modified styrenic resin sheet:

In the same manner as in (2) and (3) in Example 1, the rubber-modified styrenic resin obtained in the above (1) was pelletized and molded into a sheet, and the sheet was evaluated. In this, however, the amount of the plasticizer, liquid paraffin added to the resin was 1.0 % by mass based on the total of the polybutadiene rubber and styrene.
The results are given in Table 1.

[Comparative Example 3]

(1) Production of rubber-modified styrenic resin:

The amount of the polyfunctional initiator, 2,2-bis(4,4-di-tert-butylperoxycyclohexyl)propane to be added to the styrene solution was converted to 1000 ppm based on styrene, and the process (1) of Example 1 was tried to produce a rubber-modified styrenic resin. However, the viscosity of the reaction mixture increased too much, and removing the heat from the reactor was difficult. As a result, the temperature of the reaction system could not be controlled, and feeding the reaction liquid to the next stage was impossible.

Table 1

| Example (Comparative Example) | Weight-average Molecular Weight $\times 10^4$ | Degree of Branching | 1 cm Drawdown Time (sec) |
|---|---|---|---|
| 1 | 24.0 | 0.5 | 20.5 |
| (1) | 24.0 | 0.0 | 19.0 |
| 2 | 25.5 | 0.8 | 23.0 |
| 3 | 23.0 | 0.5 | 21.2 |
| 4 | 21.0 | 0.4 | 19.5 |
| (2) | 20.7 | 0.0 | 15.0 |
| 5 | 24.0 | 0.9 | 24.5 |

## INDUSTRIAL APPLICABILITY

The present invention provides a rubber-modified styrenic resin having the advantage of good thermoforming stability. When the resin sheet is thermoformed in vacuum or under pressure into secondary products, it ensures a sufficiently long time for its thermoforming, as its drawdown time is long. The invention also provides an effective

method for producing the resin, and also a sheet of the resin.

## Claims

1. A rubber-modified styrenic resin with particles of a rubbery polymer dispersed therein, which is **characterized in that** its continuous phase has a weight-average molecular weight (MwL) falling between 180, 000 and 280,000, and that the weight-average molecular weight (MwL) and the 1 cm drawdown time (sec) of the resin sheet satisfy the following formula:

$$1 \text{ cm drawdown time (sec)} > (MwL/10^4) - 4.0.$$

2. The rubber-modified styrenic resin as claimed in claim 1, of which the continuous phase has a degree of branching of from 0.2 to 1.0 for its absolute molecular weight of 1,000,000 measured in GPC/LALLS.

3. The rubber-modified styrenic resin as claimed in claim 1 or 2, of which the rubbery polymer content falls between 3 and 12 % by mass.

4. A method for producing a rubber-modified styrenic resin of any of claims 1 to 3 by polymerizing a rubbery polymer and a monomer component consisting essentially of a styrenic monomer in the presence of a polyfunctional initiator, wherein the amount of the polyfunctional initiator falls between 50 and 500 ppm relative to the monomer component consisting essentially of a styrenic monomer.

5. The method for producing a rubber-modified styrenic resin as claimed in claim 4, wherein the amount of the polyfunctional initiator falls between 100 and 500 ppm relative to the monomer component consisting essentially of a styrenic monomer.

6. The method for producing a rubber-modified styrenic resin as claimed in claim 4 or 5, wherein the polyfunctional initiator is a tetrafunctional organic compound of the following general formula:

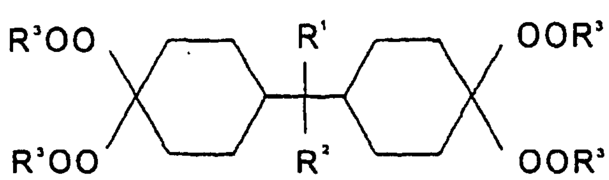

wherein $R^1$ and $R^2$ each represent a hydrogen atom or an alkyl group having 1 or 2 carbon atoms; and $R^3$ represents an alkyl group having from 1 to 8 carbon atoms.

7. The method for producing a rubber-modified styrenic resin as claimed in any of claims 4 to 6, wherein the polyfunctional initiator is 2,2-bis(4,4-di-t-butylperoxycyclohexyl)propane.

8. A method for producing a rubber-modified styrenic resin of any of claims 1 to 3 by polymerizing a rubbery polymer and a monomer component consisting essentially of a styrenic monomer in the presence of an unsaturated compound having a plurality of copolymerizing double bonds, wherein the amount of the unsaturated compound falls between 50 and 250 ppm relative to the monomer component consisting essentially of a styrenic monomer.

9. A rubber-modified styrenic resin sheet prepared by molding the rubber-modified styrenic resin of any of claims 1 to 3.

Fig. 1

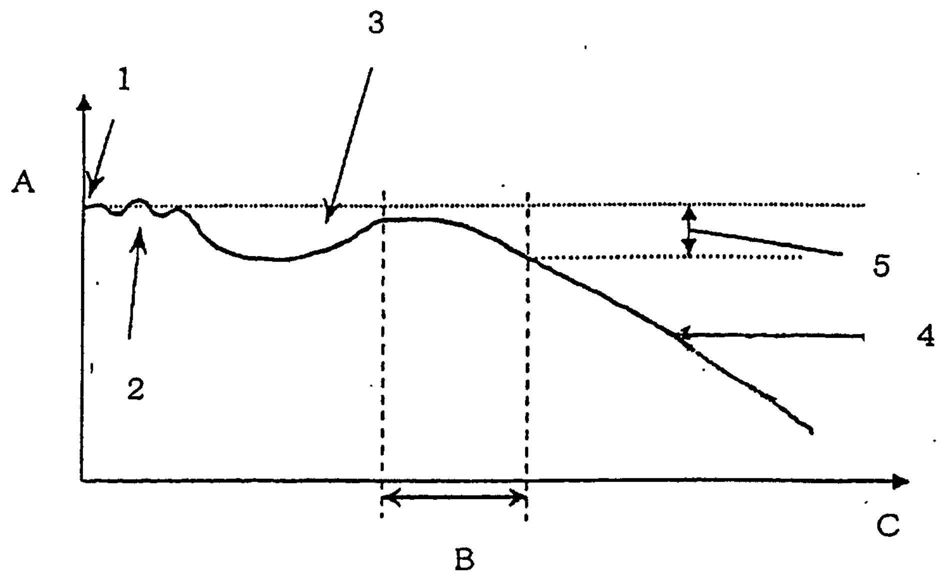

## INTERNATIONAL SEARCH REPORT

International application No.
PCT/JP00/07277

**A. CLASSIFICATION OF SUBJECT MATTER**
Int.Cl[7] C08F279/00

According to International Patent Classification (IPC) or to both national classification and IPC

**B. FIELDS SEARCHED**

Minimum documentation searched (classification system followed by classification symbols)
Int.Cl[7] C08F279/00

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| | EP, 648789, A1 (Sumitomo Chemical Co. Ltd.), 19 April, 1995 (19.04.95), | |
| X | Claims; page 4, 8th line from the bottom to page 5, line 17 | 1-3,8-9 |
| A | Claims; page 4, 8th line from the bottom to page 5, line 17 | 4-7 |
| | & JP, 07-165844, A, Claims & US, 5489629, A & US, 5489652, A | |
| | JP, 08-269137, A (Nippon Steel Chemical Co., Ltd.), 15 October, 1996 (15.10.96), | |
| X | Claims; Par. No. 0014 | 1-3,8-9 |
| A | Claims; Par. No. 0014 (Family: none) | 4-7 |
| | JP, 05-125106, A (Kayaku Akzo K.K.), 21 May, 1993 (21.05.93), | |
| X | Claims; Par. Nos. 0013, 0017 | 1-7,9 |
| A | Claims; Par. Nos. 0013, 0017 (Family: none) | 8 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27 December, 2000 (27.12.00) | 16 January, 2001 (16.01.01) |
| Name and mailing address of the ISA/ Japanese Patent Office | Authorized officer |
| Facsimile No. | Telephone No. |

Form PCT/ISA/210 (second sheet) (July 1992)